# EUROPÄISCHE PATENTSCHRIFT

(11) **EP 1 878 622 B1**
(45) Veröffentlichungstag und Bekanntmachung des Hinweises auf die Patenterteilung: **10.02.2010**
(21) Anmeldenummer: 07013054.7
(22) Anmeldetag: 04.07.2007
(51) Int. Cl.: B60R 19/24

(54) **Befestigungsvorrichtung für ein Anbauteil eines Kraftfahrzeugs**
Mounting device for a mounted part of a motor vehicle
Dispositif de fixation pour une pièce rapportée d'un véhicule automobile

(30) Priorität: 14.07.2006 DE 102006032597
(43) Veröffentlichungstag der Anmeldung: 16.01.2008
(73) Patentinhaber: Dr. Ing. h.c. F. Porsche Aktiengesellschaft, 70435 Stuttgart (DE)
(72) Erfinder: Keller, Markus, 71229 Leonberg (DE); Kruschhausen, Heinz-Arno, 75446 Wiernsheim (DE)

(56) Entgegenhaltungen:
- EP-A- 1 312 513
- DE-A1- 2 336 876
- DE-T2- 60 202 004
- FR-A- 2 531 022
- US-A1- 2006 059 791

## Beschreibung

Die Erfindung bezieht sich auf eine Befestigungsvorrichtung für ein Anbauteil nach dem Oberbegriff des Anspruchs 1.

Aus der gattungsgemäßen DE 602 02 004 T2 ist eine Verbindung von zwei Karosserieteilen aus Kunststoff bekannt, wobei am Rand des einen Kunststoffteils eine Zunge und am Rand des anderen Kunststoffteils eine Öffnung angeordnet ist und über die in die Öffnung eingesteckte Zunge eine Rastverbindung der beiden Karosserieteile erfolgt. Aus der US 20060059791 A ist eine aus mehreren Teilen zusammensetzbare Wand für einen Lastkraftwagen bekannt, wobei die Wandteile eingehängt verschwenkbar und über eine Rastverbindung, bestehend aus einem Rasthaken und einer Rastaufnahme, miteinander verhakbar sind. Des Weiteren ist aus der EP 1312513 A ein Kraftfahrzeug-Stoßfänger bekannt, der an einem Stoßfängerinnenteil und abschnittsweise an einem Stoßfängeraußenteil über eine Rastverbindung befestigbar ist, wobei die Rastverbindung aus einer Rastnase besteht, die in einen Halteabschnitt einklemmbar ist.

Aufgabe der Erfindung ist es, eine Befestigungsvorrichtung für Anbauteile von Kraftfahrzeugen an einem aufbaufesten Trägerteil zu schaffen, die ein mehrfaches lagegenaues Positionieren des Anbauteils am aufbaufesten Trägerteil in allen Montagerichtungen zum Festsetzen ermöglicht.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass ein Anbauteil wie beispielsweise ein Bugteil eines Kraftfahrzeugs, an einem aufbaufesten Trägerteil lagegenau in mehreren Richtungen positionierbar ist und danach eine Befestigung erfolgen kann. Dies wird erreicht, indem zwischen dem Anbauteil und dem aufbauseitigen festen Trägerteil mehrere Rastverbindungen vorgesehen sind, die aus wenigstens einer vom Anbauteil über ein Filmscharnier mit einer Schwenkachse verschwenkbaren Lasche bestehen, welche in einer Befestigungsstellung mit einer Rastkante am freien Laschenende eine Rastnase am aufbaufesten Trägerteil hintergreift. Insbesondere weist die Lasche eine Durchtrittsöffnung auf, welche die Rastkante besitzt, die die Rastnase aufbaufest am Trägerteil in der Befestigungsstellung nach einem Schwenkvorgang von oben her hintergreift. Hierdurch wird in vorteilhafter Weise erreicht, dass das Anbauteil mittels der Lasche zum Trägerteil derart elastisch angesetzt gehalten wird, dass eine Einstellmöglichkeit des Anbauteils in X- und in Z-Richtung, d.h. in Längs- und Hochrichtung zum Fahrzeug ermöglicht wird.

Am Anbauteil sind zur Lagefixierung am aufbaufesten Trägerteil zusätzlich zu den Laschen am Außenrand vorragende Stege vorgesehen, die in Schlitze des aufbaufesten Trägerteils eingreifen und die Stege zumindest zu beiden Seiten einer Lasche angeordnet sind und das aufbaufeste Trägerteil an dem dem Außenrand abgekehrten Innenrand über Schenkel mit dem Aufbauteil fest verbunden ist. Nach dem endgültigen Positionieren des Anbauteils am Trägerteil erfolgt ein Befestigen durch eine feste Verbindung beispielsweise über die Schenkel am Trägerteil, welche mit Schenkeln am Anbauteil verbindbar sind.

Die Schwenkachse des Filmscharniers ist in dem Außenrand des Trägerteils angeordnet und die Durchtrittsöffnung der Lasche ist endseitig am freien Ende vorgesehen und die Rastkante ist zu einem Zwischenschenkel der Lasche abgewinkelt und hintergreift einen der Rastkante zugerichteten Vorsprung der Rastnase. Die Schwenkachse des Filmscharniers liegt genau im Bereich des Randes des Trägerteils, so dass in der Befestigungsstellung der Lasche ein Anschlag über den Rand gebildet wird.

Ein Ausführungsbeispiel der Erfindung ist in den Zeichnungen dargestellt und wird im folgenden näher beschrieben.

Es zeigen
- Fig. 1: eine Ansicht von innen her auf das aufbaufeste Trägerteil mit davor angeordnetem Anbauteil in einer Befestigungsstellung über die Lasche, und
- Fig. 2: einen Schnitt nach der Linie II-II der Fig. 1 durch eine Verbindungsstelle zwischen Anbauteil und Trägerteil.

Eine Befestigungsvorrichtung für ein Anbauteil 1 bzw. für ein Bugteil eines Kraftfahrzeugs an einem aufbaufesten Trägerteil 2 umfasst unter anderem Laschen 3, Stege 4 und Schenkel 5 am Anbauteil 1 sowie Schlitze 6 und Schenkel 7 am aufbaufesten Trägerteil 2.

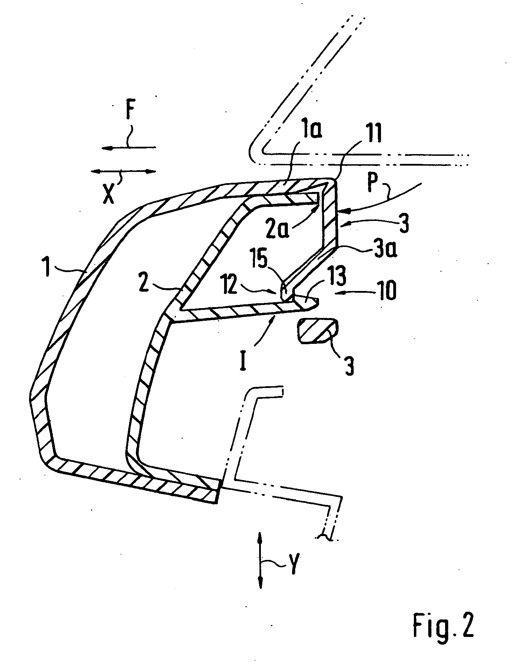

Zur Positionierung des Anbauteils 1 in X- und Y-Richtung des Fahrzeugs ist oder sind zwischen dem Anbauteil 1 und dem Trägerteil 2 eine oder mehrere Rastverbindungen 10 vorgesehen. Diese besteht aus der mittels eines Filmscharniers bzw. um eine Schwenkachse 11 verschwenkbaren Lasche 3. Diese hintergreift in einer Betriebsstellung I (Fig. 2) mit ihrem freien Ende 12 eine Rastnase 13 am Trägerteil 2.

Die Lasche 3 ist in dieser Befestigungsstellung I um ca. 90° zum Anbauteil 1 abgebogen und in der Ecke zwischen Lasche 3 und oberem Anbauteil 1a liegt ein Rand 2a des Trägerteils 2 an und kann sich abstützen.

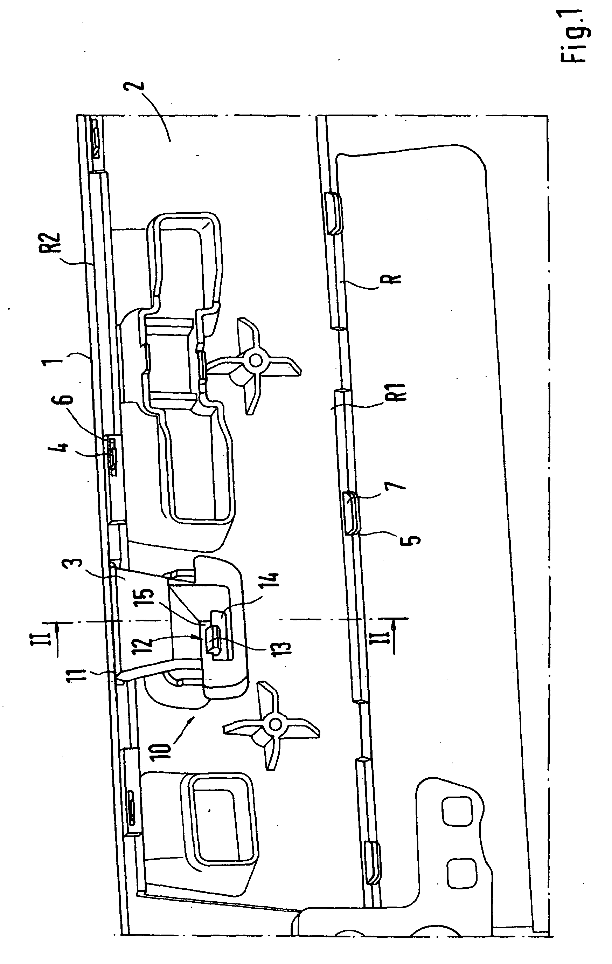

Wie in Fig. 1 näher zu erkennen ist, wird das Anbauteil 1 über Stege 4, die in korrespondierende Schlitze 6 des Trägerteils 2 eingreifen, zusätzlich fixiert und gehalten. Des weiteren sind zur Befestigung des Anbauteils 1 am Trägerteil 2 am unteren Rand R1 und R des Anbauteils 1 und des Trägerteils 2 die jeweils vom Rand R und R1 vorragende Schenkel 5 und 7 angeordnet, die miteinander fest verbunden werden.

Die Lasche 3 ist mit einer Durchtrittsöffnung 14 versehen, welche in der Öffnung 14 eine Rastkante 15 ausbildet, die die Rastnase 13 im Trägerteil 2 in der Befestigungsstellung I hintergreift, wie in Fig. 2 näher dargestellt ist.

Die Schwenkachse 11 des Filmscharniers ist im Außenrand R2 des Anbauteils 1 angeordnet, wobei die Durchtrittsöffnung 14 der Lasche 3 mit der Rastkante 15 endseitig der Lasche 3 nahe dem freien Ende vorgesehen ist. Die Rastkante 15 ist von einem Zwischenschenkel 3a der Lasche 3 abgewinkelt und die Rastkante 15 kann nach einer Schwenkbewegung in Pfeilrichtung P die Rastnase 13 am Trägerteil hintergreifen.

Die elastische Spannung der abgebogenen Lasche 3 hält die Rastkante 15 fest an der Rastnase 13.

## Patentansprüche

1. Trägerteil (2) mit daran mittels einer Befestigungsvorrichtung über Rastverbindungen (10) befestigtem Anbauteil (1) eines Kraftfahrzeugs wobei zwischen dem Anbauteil (1) und dem aufbauseitig festen Trägerteil (2) mehrere Rastverbindungen (10) vorgesehen sind, **dadurch gekennzeichnet, dass** die Rastverbindungen (10) aus wenigstens einer vom Anbauteil (1) über ein Filmscharnier mit einer Schwenkachse (11) verschwenkbaren Lasche (3) besteht und die Lasche (3) eine Durchtrittsöffnung (14) für eine Rastnase (13) des aufbaufesten Trägerteils (2) aufweist und die Lasche (3) in einer Befestigungsstellung (I) mit einer Rastkante (15) am freien Laschenende die Rastnase (13) des Trägerteils (2) hintergreift.

2. Befestigungsvorrichtung nach Anspruch 1, **dadurch gekennzeichnet, dass** in der Befestigungsstellung (I) die Rastkante (15) die Rastnase (13) am aufbaufesten Trägerteil (2) von oben her in einen Schwenkvorgang in Pfeilrichtung (P) hintergreift.

3. Befestigungsvorrichtung nach den Ansprüchen 1 oder 2, **dadurch gekennzeichnet, dass** am Aufbauteil (1) zur Lagefixierung am aufbaufesten Trägerteil (2) zusätzlich zu der Lasche (3) am Außenrand (R2) vorragende Stege (4) vorgesehen sind, die in Schlitze (6) des aufbaufesten Trägerteils (2) eingreifen und die Stege (4) zumindest zu beiden Seiten einer Lasche (3) angeordnet sind und dass das aufbaufeste Trägerteil (2) an dem den Außenrand (R2) abgekehrten Innenrand (R1) Schenkel (7) aufweist, die mit dem Anbauteil (1) fest verbunden sind.

4. Befestigungsvorrichtung nach den Ansprüchen 1, 2 oder 3, **dadurch gekennzeichnet, dass** die Schwenkachse (11) des Filmscharniers in dem Außenrand (R2) des Trägerteils (2) angeordnet und die Durchtrittsöffnung (14) in der Lasche (3) endseitig am freien Ende vorgesehen ist und die Rastkante (15) zu einem Zwischenschenkel (3a) der Lasche (3) abgewinkelt ist und einen der Rastkante (15) zugerichteten Vorsprung der Rastnase (13) hintergreift.

## Claims

1. Support part (2) having an add-on part (1) of a motor vehicle fastened to it by means of a fastening device via latching connections (10), with a plurality of latching connections (10) being provided between the add-on part (1) and the support part (2) fixed on the vehicle body, **characterized in that** the latching connections (10) comprise at least one tab (3) which can be pivoted from the add-on part (1) via a film hinge with a pivot axis (11) and the tab (3) has a passage opening (14) for a latching lug (13) of the support part (2) fixed on the vehicle body, and the tab (3), in a fastening position (I), engages by means of a latching edge (15) at the free end of the tab behind the latching lug (13) on the support part (2).

2. Fastening device according to Claim 1, **characterized in that**, in the fastening position (I), the latching edge (15) engages, in a pivoting operation in the arrow direction (P), from above behind the latching lug (13) on the support part (2) fixed on the vehicle body.

3. Fastening device according to Claim 1 or 2, **characterized in that**, in addition to the tab (3), webs (4) protruding on the outer edge (2) are provided on the add-on part (1), for positional fixing on the support part (2) fixed on the vehicle body, said webs engaging in slots (6) of the support part (2) fixed on the vehicle body and the webs (4) being arranged at least on both sides of a tab (3), and **in that** the support part (2) fixed on the vehicle body has, on the inner edge (R1) which faces away from the outer edge (R2), limbs (7) which are connected fixedly to the add-on part (1).

4. Fastening device according to Claims 1, 2 or 3, **characterized in that** the pivot axis (11) of the film hinge is arranged in the outer edge (R2) of the support part (2) and the passage opening (14) in the tab (3) is provided on the end side at the free end and the latching edge (15) is angled to form an intermediate limb (3a) of the tab (3) and engages behind a projection of the latching lug (13), which projection points towards the latching edge (15).

## Revendications

1. Pièce de support ((2) avec une pièce rapportée (1) d'un véhicule automobile fixée à celle-ci par des assemblages à déclic (10) au moyen d'un dispositif de fixation, dans laquelle il est prévu plusieurs assemblages à déclic (10) entre la pièce rapportée (1) et la pièce de support (2) solidaire de la structure, **caractérisée en ce que** les assemblages à déclic (10) se composent d'au moins une patte (3) pivotant autour d'un axe de pivotement (11) par une charnière pelliculaire par rapport à la pièce rapportée (1) et la patte (3) présente une ouverture de passage (14) pour un ergot d'encliquetage (13) de la pièce de support (2) solidaire de la structure, et la patte (3) accroche l'arrière de l'ergot d'encliquetage (13) de la pièce de support (2) avec une arête d'encliquetage (15) à l'extrémité libre de la patte, dans une position de fixation (I).

2. Dispositif de fixation selon la revendication 1, **caractérisé en ce que**, dans la position de fixation (I), l'arête d'encliquetage (15) accroche l'arrière de l'ergot d'encliquetage (13) sur la pièce de support (2) solidaire de la structure, par le haut en un processus de pivotement dans la direction de la flèche (P).

3. Dispositif de fixation selon la revendication 1 ou 2, **caractérisé en ce qu'**il est prévu sur la pièce rapportée (1), pour fixer la position sur la pièce de support (2) solidaire de la structure, en plus de la patte (3), des nervures (4) saillantes sur le bord extérieur (R2), qui s'engagent dans des fentes (6) de la pièce de support (2) solidaire de la structure et les nervures (4) sont disposées au moins sur les deux côtés d'une patte (3), et **en ce que** la pièce de support (2) solidaire de la structure présente, sur le bord intérieur (R1) situé à l'opposé du bord extérieur (R2), des branches (7) qui sont assemblées fermement à la pièce rapportée (1).

4. Dispositif de fixation selon au moins une des revendications 1, 2 ou 3, **caractérisé en ce que** l'axe de pivotement (11) de la charnière pelliculaire est disposé dans le bord extérieur (R2) de la pièce de support (2) et l'ouverture de passage (14) dans la patte (3) est prévue du côté de l'extrémité libre et l'arête d'encliquetage (15) est coudée en une branche intermédiaire (3a) de la patte (3) et accroche l'arrière d'une saillie de l'ergot d'encliquetage (13) orientée vers l'arête d'encliquetage (15).
